(19) **Europäisches Patentamt**
**European Patent Office**
**Office européen des brevets**

(11) **EP 4 369 617 B1**

(12) **EUROPÄISCHE PATENTSCHRIFT**

(45) Veröffentlichungstag und Bekanntmachung des Hinweises auf die Patenterteilung:
**05.11.2025 Patentblatt 2025/45**

(21) Anmeldenummer: **23209750.1**

(22) Anmeldetag: **14.11.2023**

(51) Internationale Patentklassifikation (IPC):
*H04B 5/22* (2024.01)   *H04B 5/24* (2024.01)
*H04B 5/70* (2024.01)   *H04Q 9/00* (2006.01)
*G01D 21/00* (2006.01)   *H04B 5/79* (2024.01)

(52) Gemeinsame Patentklassifikation (CPC):
**G01D 21/00; H04B 5/22; H04B 5/24; H04B 5/70; H04B 5/79; H04Q 9/00;** H04Q 2209/886

(54) **MECHANISCHE BEARBEITUNGSMASCHINE MIT ROTIERENDEM ELEMENT**

MECHANICAL PROCESSING MACHINE WITH ROTATING ELEMENT

MACHINE D'USINAGE MÉCANIQUE AVEC ÉLÉMENT ROTATIF

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **14.11.2022 DE 102022212033**

(43) Veröffentlichungstag der Anmeldung:
**15.05.2024 Patentblatt 2024/20**

(73) Patentinhaber: **Fraunhofer-Gesellschaft zur Förderung
der angewandten Forschung e.V.
80686 München (DE)**

(72) Erfinder:
• **DRÄGER, Tobias
91058 Erlangen (DE)**

• **WORM, Johannes
91058 Erlangen (DE)**
• **HAALA, Oliver
91058 Erlangen (DE)**
• **KRAGE, Robin
09126 Chemnitz (DE)**
• **SCHÖNIGER, Konstantin
09126 Chemnitz (DE)**

(74) Vertreter: **Pfitzner, Hannes et al
Schoppe, Zimmermann, Stöckeler
Zinkler, Schenk & Partner mbB
Patentanwälte
Radlkoferstraße 2
81373 München (DE)**

(56) Entgegenhaltungen:
**EP-B1- 3 488 206       DE-A1- 10 142 273
US-A1- 2021 199 777**

**Beschreibung**

Ausführungsbeispiele der vorliegenden Erfindung beziehen sich auf eine mechanische Bearbeitungsmaschine mit einem rotierenden Element mit einer Sensoreinheit. Weitere Ausführungsbeispiele der Bearbeitungsmaschine beziehen sich insbesondere auf eine Wälzschleifmaschine oder Honmaschine. Weitere Beispiele, die nicht zu der beanspruchten Erfindung gehören, beziehen sich auf ein rotierendes Element in Form eines Rades, eines Propellers, einer Bremse oder Bremskomponente.

Bei immer mehr mechanischen bzw. rotierenden Komponenten wird Sensorik und/oder Aktorik in der rotierenden Einheit eingesetzt. Beispiele sind Werkzeugmaschinen, bei welchen das rotierende Werkzeug überwacht werden soll. Die besondere Herausforderung besteht immer darin, eine zuverlässige Datenübertragung und/oder Energieübertragung zu ermöglichen. Die Energieübertragung hat beispielsweise den Sinn, die Sensorik mit elektrischer Energie zu versorgen.

Häufig wird gemäß dem Stand der Technik die Energieversorgung dadurch realisiert, dass das rotierende Element beispielsweise mittels einer Batterie versehen ist. Derartige Batteriespeicherung ist allerdings aus Sicht des Wartungsaufwandes problematisch. Eine alternative Lösung ist es, gerade die Energieübertragung mittels schleifenden Elementen zu realisieren. Auch diese schleifenden Elemente unterliegen Wartungsintervallen. Ein weiterer Ansatz besteht in der Nahfeld-Daten-/Energie-Übertragung. Problematisch ist, dass hier die Energiemengen häufig beschränkt sind. Deshalb besteht der Bedarf nach einem verbesserten Ansatz.

Bereits im Stand der Technik sind einige Datenübertragungsverfahren vorhanden. So offenbart die EP 3488206 B1 eine Vorrichtung zum Messen einer Temperatur mit einer entsprechenden Datenübertragung. Die US 2021/199777 A1 beschreibt ein Fahrzeug mit einem LIDAR-Sensor, der auf einem rotierenden Element des Fahrzeugs angeordnet ist. Die DE 10142273 beschreibt eine Messdatenübertragung.

Aufgabe der vorliegenden Erfindung ist es, ein Konzept zu schaffen, das eine gute Energieübertragung und zuverlässige Datenübertragung ermöglicht.

Die Aufgabe wird durch den Gegenstand des unabhängigen Patentanspruchs 1 gelöst.

Ausführungsbeispiele der vorliegenden Erfindung schaffen ein rotierendes Element mit einer Sensoreinheit. Die Sensoreinheit weist ein Sensorelement auf, das ausgebildet ist, um einen physikalischen Parameter zu bestimmen und einen entsprechenden Sensorwert abzuleiten. Ferner umfasst die Sensoreinheit ein kapazitives Datenübertragungselement sowie ein separates induktives Energieübertragungselement. Das kapazitive Datenübertragungselement ist ausgebildet, um den zumindest einen Sensorwert nach extern zu übertragen. Das induktive Energieübertragungselement ist ausgebildet, um das zumindest eine Sensorelement und/oder das Datenübertragungselement mit elektrischer Energie zu versorgen.

Ausführungsbeispielen der vorliegenden Erfindung liegt die Erkenntnis zugrunde, dass für eine ausreichende Energieübertragung induktive Energieübertragung optimal ist, während für die Datenübertragung die kapazitive Technologie optimal ist. Durch die Separierung der zwei Elemente wird sichergestellt, dass die Datenübertragung nicht durch die Energieübertragung und umgekehrt gestört wird. Deshalb schaffen Ausführungsbeispiele der Erfindung vorteilhafterweise ein Konzept, das sowohl eine hohe Energieübertragung als auch eine zuverlässige Datenübertragung bei einem rotierenden Element ermöglicht.

Entsprechend weiteren Ausführungsbeispielen weist die Sensoreinheit ferner Energieversorgungsmittel auf, die ausgebildet sind, um die durch das induktive Energieübertragungselement bereitgestellte elektrische Energie zur Versorgung der Sensoreinheit und/oder der kapazitiven Datenübertragungseinheit aufzubereiten. Hierbei kann es sich beispielsweise um einen Gleichrichter und/oder einen Gleichrichter in Kombination mit einem elektrischen Stromspeicher, wie z. B. einer Kapazität oder Batterie, handeln. Somit ist vorteilhafterweise möglich, eine konstante Energieversorgung für Sensor und/oder Funk bereitzustellen.

Entsprechend weiteren Ausführungsbeispielen ist das induktive Energieübertragungselement ausgebildet, um ein HF-Signal mit einer Frequenz kleiner 500 kHz und/oder größer 1 kHz, oder kleiner 150 kHz und/oder größer 100 kHz, oder um die 120 kHz zu empfangen.

Alternativ oder additiv weist das induktive Energieübertragungselement einen Filter auf, der ausgebildet ist, um Frequenzen größer 150 kHz und/oder größer 500 kHz herauszufiltern und/oder der als Tiefpassfilter ausgelegt ist.

Somit kann vorteilhafterweise das HF-Signal zugeordnet zu dem Frequenzbereich der induktiven Energieübertragung herausgefiltert werden und von anderen Frequenzen, z. B. des kapazitiven Datenübertragungselements, separiert werden. Entsprechend Ausführungsbeispielen ist das induktive Energieübertragungselement mit einem Empfänger und/oder einem Sende-Empfänger gekoppelt. Beispielweise kann das induktive Energieübertragungselement ausgebildet sein, Zusatzinformationen zur Steuerung und/oder zur Interpretation des kapazitiven Datenflusses zu übertragen. Beispielsweise können diese Zusatzinformationen aufmoduliert sein, das heißt also ein weiteres, nicht zur Energieübertragung erforderliches Signal aufweisen. Ein weiterer Einsatzzweck dieser Zusatzinformation ist die Blindleistungssteuerung. Weiter könnte sich das kapazitive Datenübertragungselement anhand der Signalform des induktiven Übertragungssignals auf seinen Kommunikationspartner synchronisieren. Insofern stellt die Zusatzinformation eine Art Synchronisationssignal dar. Auch können Ressourceninformation für das kapazitiv zu übertragende Signal ausgetauscht werden.

Entsprechend weiteren Ausführungsbeispielen ist das kapazitive Datenübertragungselement für Frequenzen größer 100 kHz, größer 0,5 MHz, größer 1 MHz, oder größer 10 MHz ausgelegt. Ein Sender und/oder Sende-Empfänger des kapazitiven Datenübertragungselements bzw. der mit dem kapazitive Datenübertragungselement gekoppelt ist, weist einen Filter auf, der ausgebildet ist, Frequenzen kleiner 1 MHz, kleiner 0,5 MHz, kleiner 100 kHz herauszufiltern. Beispielsweise kann dieser als Hochpassfilter ausgelegt sein. Hierbei ist vorteilhaft, dass so wiederum die Frequenzen für die Datenübertragung von Störfrequenzen, z. B. Störfrequenzen aus der induktiven Energieübertragung, extrahiert werden. Bevorzugter Weise ist ein Abstand zwischen den Frequenzen, die im kapazitiven Datenübertragungselement verwendet werden und Frequenzen, die von dem induktiven Energieübertragungselement verwendet werden zum Beispiel eine Dekade.

Bezüglich der Implementierung sei angemerkt, dass entsprechend Ausführungsbeispielen das kapazitive Datenübertragungselement eine erste Antenne aufweisen kann. Beispielsweise kann die erste Antenne als Ringelektrode und/oder Kapazität ausgeführt sein. Alternativ oder additiv wäre es denkbar, dass das kapazitive Datenübertragungselement zwei erste Antenne aufweist. Diese können beispielsweise zur differentiellen Datenübertragung ausgelegt sein. Entsprechend Ausführungsbeispielen kann das induktive Energieübertragungselement eine zweite Antenne aufweisen. Die zweite Antenne kann beispielsweise durch eine Spule und/oder eine Induktivität gebildet sein. Die Verwendung einer Spule oder Induktivität ermöglicht entsprechend weiteren Ausführungsbeispielen auch, dass eine elektrische Energie einfach durch die Rotation induziert werden kann. In diesem Ausführungsbeispiel wäre es dann möglich, dass das Energieübertragungselement als Art Energie-Harvester ausgeführt ist, wobei sich dann beispielsweise die Induktivität/Pole innerhalb eines Magnetfelds bewegt/bewegen. Die oben erläuterten Energieversorgungsmittel können dann beispielsweise einen Energiespeicher aufweisen, der die Energie zwischenspeichert, so dass auch ohne eine Magnetfeldänderung Energie bereitgestellt wird.

Erfindungsgemäß weist die Sensoreinheit einen zusätzlichen Aktor auf, der ausgebildet ist, bei Versorgung mit elektrischer Energie und/oder Ansteuerung eine Bewegung und/oder eine Kraftabgabe und/oder eine Kühlung/Erwärmung zu bewirken.

Bezüglich des kapazitiven Datenübertragungselements sei angemerkt, dass dieses entsprechend Ausführungsbeispielen bidirektional ausgebildet ist. Beispielsweise kann das kapazitive Datenübertragungselement ausgebildet sein, um mit unterschiedlichen Zeitslots und/oder unterschiedlichen Frequenzen und/oder unterschiedlichen Ressourcen zu senden und zu empfangen.

Die Erfindung ist definiert durch Anspruch 1, der eine mechanische Bearbeitungsmaschine, wie z. B. eine Schleifmaschine, eine Wälzschleifmaschine, eine Honmaschine, mit einem entsprechenden rotierenden Element definiert.

Entsprechend einem Ausführungsbeispiel kann das rotierende Element ausgebildet sein, eine Rotationsbewegung, eine Rotationsbewegung in Kombination mit einer Translationsbewegung auszuführen. Das ist beispielsweise auch bei einem Rad als rotierendes Element, bei einem Propeller als rotierendes Element und/oder einer Bremse oder Bremskomponente als rotierendes Element gegeben.

Nicht zur beanspruchten Erfindung gehörende Beispiele werden anhand der beiliegenden Zeichnungen erläutert. Es zeigen:

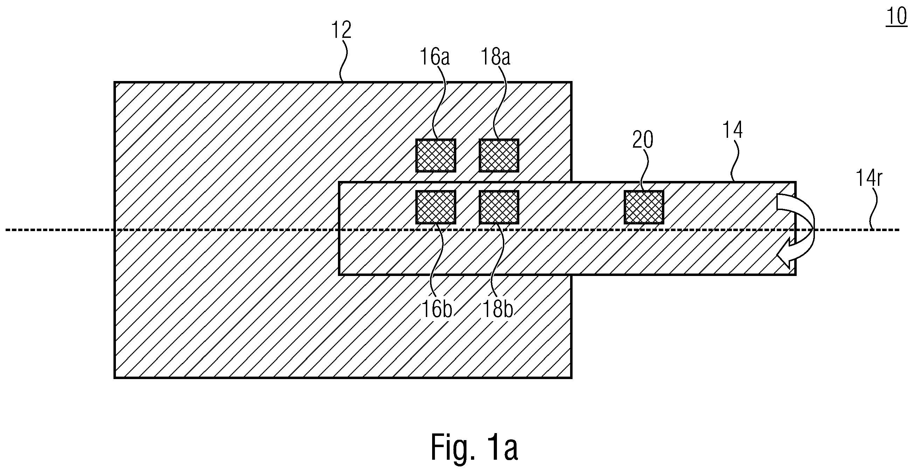

Fig. 1a    eine schematische Darstellung eines rotierenden Elements in einer ersten Variante gemäß einem Ausführungsbeispiel; und

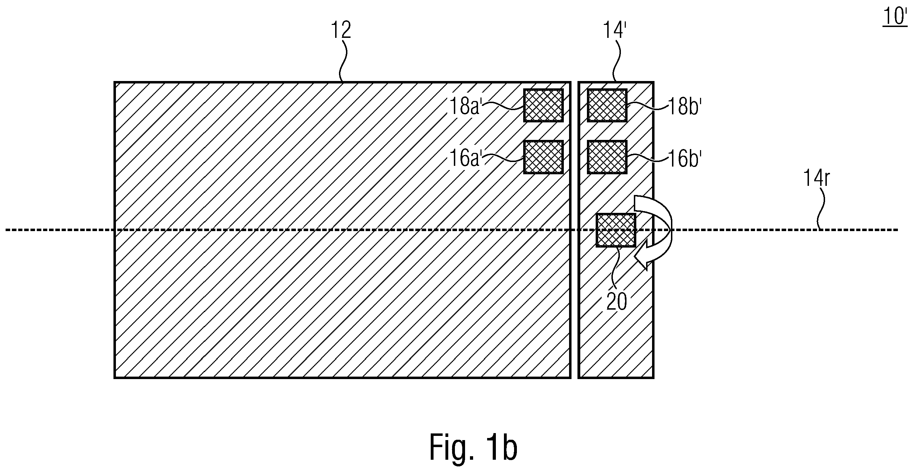

Fig. 1b    eine schematische Darstellung eines rotierenden Elements in einer zweiten Variante gemäß einem weiteren Ausführungsbeispiel.

Bevor nachfolgend nicht zur beanspruchten Erfindung gehörende Beispiele anhand der beiliegenden Zeichnungen erläutert werden, wird einerseits auf die Grundproblematik im Vorfeld eingegangen, andererseits werden einige Begriffe, die bei der Lösung des Problems relevant sind, definiert und voneinander abgegrenzt.

**Wie oben** bereits erläutert, besteht grundsätzlich Bedarf zur Übertragung von Sensor- und Steuerdaten innerhalb von Anlagen, Geräten und Maschinen. Bei rotierenden oder allgemein sich bewegenden Teilen wurden bis dato solche Verbindungen oft mit Schleifringen, Schleppkabeln oder Federkontakten gelöst, was jedoch mechanisch anfällig und dadurch wartungsintensiv ist. Deshalb wurden diese auf Kontakt basierenden elektrischen Verbindungen häufig durch drahtlose Lösungen ersetzt. Gerade bei Energieübertragung ist jedoch die zu übertragende elektrische Leistung häufig die relevante Grenze. Systeme, die gute Energieübertragungseigenschaften haben, sind häufig in ihrer Bandbreite begrenzt oder weisen nicht-ausreichende Stabilität und Sicherheit bei Datenverbindungen auf. Gerade bei rotorischen Maschinen spielt auch der begrenzte Bauraum, insbesondere des rotierenden Elements eine entscheidende Rolle. Im Regelfall wächst auch mit der Größe der Vorrichtung der Energiebedarf, so dass der einfache Versuch die Baugröße anwachsen zu lassen, um ausreichend Bauraum zu schaffen, schwierig ist.

Ausführungsbeispiele der vorliegenden Erfindung basieren darauf, dass die Daten-/Energieübertragung im Nahfeld erfolgt, so dass also die Abstände von dem entsprechenden Sender und Empfänger gering gehalten werden. Insofern verwenden Ausführungsbeispiele der vorliegenden Erfindung Sender und Empfänger, die zueinander mit einem geringen Abstand von beispielsweise weniger als 2,5 cm, weniger als 1 cm, weniger als 5 mm oder sogar weniger als 1 mm voneinander beabstandet sind. Der Abstand ist nicht absolut zu betrachten, sondern hängt typischerweise von der eingesetzten Wellenlänge λ ab. In der Fachmeinung wird bei einem Abstand r, in dem vor allem das reaktive Nahfeld vorherrscht, für räumlich große Antennen D>λ gesprochen. Entsprechend Ausführungsbeispielen ist der Abstand Sender und Empfänger so gewählt, dass einen Nahfeldkommunikation erfolgt.

Entsprechend weiteren Ausführungsbeispielen können die Abstände auch größer sein, so dass beispielsweise auch ein Fernfeldbetrieb möglich ist. Das Fernfeld beginnt typischerweise bei $r \geq \frac{2D^2}{\lambda}$ Hierbei ist D die größte Abmessung der Antenne und λ die Wellenlänge. Gerade die Energieübertragung im Fernfeld ist mit manchen Übertragungsvarianten vorteilhaft.

Hierdurch ergibt sich dann $r < 0{,}62\sqrt{D^3/\lambda}$, wobei D die größte Abmessung der Antenne und λ die Wellenlänge darstellt. Eine Dimension weist also eine Wellenlängenabhängigkeit auf. Als Sender und/oder Empfänger kommen beispielsweise Antennen oder Streifenleitungen zum Einsatz, die sich gut in rotorische Elemente integrieren lassen und bei Definition des Nahfelds in Bezug zu der Wellenlänge und dem Abstand über obige Formel zu setzen sind. Über obige Formel hinaus sei noch angemerkt, dass auch ein Nahfeld beziehungsweise ein sogenanntes mittleres Nahfeld, was auch als Fresnelbereich bezeichnet wird, wie folgt definiert sein kann:

$$\frac{2D^2}{\lambda} > r \geq 0{,}62\sqrt{D^3/\lambda},$$

**Es hat sich** gezeigt, dass sowohl die induktive Daten- und/oder Energieübertragung als auch die kapazitive Daten- und/oder Energieübertragung einen guten Ausgangspunkt bieten. Ein Beispiel für eine typischerweise verwendete induktiv gekoppelte Energie-/Datenübertragung ist die weit verbreitete RFID-Technologie. Im Allgemeinen basieren die meisten induktiven Datenübertragungssysteme im Nahfeld auf der transformativen Wirkung gekoppelter Spulen, die in Resonanz betrieben werden. Durch die Resonanzüberführung in der Sekundärspule lassen sich erheblich größere Reichweiten erzielen, wobei dann hier wiederum begrenzte Bandbreiten zur Verfügung stehen.

Der Frequenzbereich von induktiver Übertragung von HF-Signalen kann beispielsweise im Bereich von 1 kHz bis 500 kHz (< 500 kHz und/oder > 1 kHz) oder sogar im Bereich zwischen 100 kHz und 150 kHz (> 100 kHz und < 150 kHz) oder bevorzugt im Bereich um 120 kHz (± 10 kHz) angenommen werden.

Eine weitere Daten- und/oder Energieübertragung ist die kapazitive Daten-/Energieübertragung. Eine kapazitive Kopplung lässt häufig mehr Betrachtungsweisen möglich. Bei großmechanischen Abmessungen der Elektrode im Vergleich zu der Wellenlänge ($< \frac{\lambda}{10}$) kann man die Strecke trivial als diskreten Kondensator modellieren. Bei der kapazitiven Energieübertragung kommen zwei Kondensatorhälften oder allgemein Antennen beziehungsweise Antennenstrukturen zum Einsatz. Alternativ kann die kapazitive Kopplung auch als Streifenleitung im Streufeld betrachtet werden. Alle Modellbildungen offenbaren die entsprechenden Vor- und Nachteile bei der Daten- und/oder Energieübertragung. Diese sind auch begrenzt abhängig, weil häufig bei der kapazitiven Energie-/Datenübertragung Frequenzen größer als 100 kHz oder sogar größer als 0,5 MHz, 1 MHz oder größer 10 MHz zum Einsatz kommen.

Wie zu erkennen ist, gibt es bei kapazitiver und induktiver Übertragung auch einen sogenannten Überlappbereich, so dass häufig davon ausgegangen werden kann, dass einige Übertragungsvarianten kapazitive und induktive Anteile haben.

Die Frequenz von 400 kHz weist einen solchen Koexistenzbereich auf.

Die unterschiedlichen Kopplungsvarianten, die eben erläutert wurden, haben für die Daten- und/oder Energieübertragung unterschie,dliche Vor- und Nachteile, die teilweise bereits angesprochen wurden. Im Allgemeinen hat sich gezeigt, dass gerade für die Energieübertragung die induktive Kopplung zu bevorzugen ist, während für die Datenübertragung die kapazitive Kopplung zu bevorzugen ist. Eine große Ausweitung des Frequenzbereichs bei einem Daten- und Energieübertragungselement, z. B. im Koexistenzbereich bringt allerdings auch häufig die Probleme der gegenseitigen Beeinflussung der unterschiedlichen Übertragungsvarianten mit sich. Deshalb basieren Ausführungsbeispiele der vorliegenden Erfindung auf der Erkenntnis, für bewegliche Systeme, insbesondere für rotorische Systeme, sowohl die induktive Energieübertragung als auch die kapazitive Datenübertragung parallel zu verwenden. Ein Ausführungsbeispiel, das sich diese Erkenntnis zunutze macht, ist in Fig. 1a gezeigt.

Fig. 1a zeigt eine Maschine 10 mit einem rotierenden Element 14, das gegenüber dem feststehenden Element 12 rotiert. Bei dem rotierenden Element 14 kann es sich beispielsweise um eine Spindel handeln, die gegenüber dem feststehenden Element 12 der Anlage 10 rotorisch gelagert ist. Die Rotationsachse ist mittels dem Bezugszeichen 14 erkenntlich gemacht. Zur Daten- und/oder Energieübertragung zwischen dem feststehenden Element 12 und dem rotierenden Element 14 sind die Datenübertragungsmittel 18a, 18b, nämlich kapazitive Datenübertragungsmittel, und die Energieübertragungsmittel 16a und 16b, nämlich induktive Energieübertragungsmittel, vorgesehen. Entsprechend dem Ausführungsbeispiel sei angenommen, dass sowohl Daten als auch Energie von dem feststehenden Element 12 zum rotierenden Element 14 übertragen werden sollen. Insofern stellt das induktive Element 16, z. B. eine Streifenleitung, den Sender dar, während die gegenüberliegende Streifenleitung beziehungsweise das gegenüberliegende Element 16b den induktiven Empfänger darstellt. Der kapazitive Datensender/-empfänger (Transceiver) ist durch das Element 18a gebildet, während der kapazitive Datenempfänger durch das Element 18b gebildet ist. Der Datensender/-empfänger (Transceiver) kann beispielsweise symmetrisch so aufgebaut werden sein, dass eine Bidirektionale Übertragung möglich ist. Bei diesen zwei Elementen kann es sich ebenso um eine Art Streifenleitungen handeln, so dass durch jede **Streifenleitung** (das heißt durch die Streifenleitung auf dem feststehenden Element 12 und die Streifenleitung auf dem rotierenden Element 14) jeweils eine Kapazitätshälfte/Kondensatorplatte ausgebildet wird.

Sowohl die Elemente 16a und 16b als auch die Elemente 18a und 18b sind jeweils geometrisch einander zugeordnet. In diesem Ausführungsbeispiel bei Fig. 1a sind Empfänger 16b, 18b und Sender 16a und 18a radial angeordnet, das heißt entlang des Umfangs. Entsprechend einem Ausführungsbeispiel ist ein Abstand zwischen den zwei unterschiedlichen Elemente 16a und 16b ausreichend groß, so dass hier nicht eine gegenseitige Beeinflussung vorherrscht. Das Gleiche gilt für die Beabstandung der zugehörigen Elemente 16b und 18b. Beispielsweise kann der Abstand zwischen 16a und 18a größer sein als der Abstand zwischen 16a und 16b und/oder größer sein als der Abstand zwischen 18a und 18b.

Durch diese Anordnung ist es vorteilhafterweise möglich, dass sowohl Daten als auch Energie parallel übertragen werden, wobei die Datenübertragung ausreichend zuverlässig mit hoher Bandbreite erfolgt und die Energieübertragung in ausreichendem Umfang. Vorteilhafterweise können durch die Entkopplung der kapazitiven und induktiven Übertragung die Elemente 16a/16b und 18a/18b unterschiedlich groß dimensioniert sein, so dass jedes Element auf den entsprechenden Zweck optimiert wird. Durch die Implementierung werden also die Vorteile der zwei unterschiedlichen Energie-Datenübertragungen kombiniert.

Entsprechend Ausführungsbeispielen verwenden die Elemente 16a und 18a beziehungsweise 16b und 18b unterschiedliche Frequenzen, so wie sie beispielsweise oben definiert wurden. Bei der induktiven Übertragung kann beispielsweise eine Frequenz im Bereich von 24 kHz (Bereich von 10 bis 50 kHz oder bis 120 kHz oder 150 kHz) verwendet werden, während bei der kapazitiven Übertragung eine Frequenz im Bereich von 12 MHz (Bereich von 1Mhz bis 15 MHz oder 20 MHz) verwendet wird. Entsprechend Ausführungsbeispielen kann jedes der Sendeelemente 16a und 18a beziehungsweise Empfangselemente 16b und 18b mit einem entsprechenden Filter kombiniert sein. Bei der induktiven Energieübertragung kann es sich beispielsweise um einen Tiefpassfilter handeln, der entsprechend Ausführungsbeispielen ausgebildet ist, Frequenzen > 150 kHz und/oder > 500 kHz herauszufiltern. Bei der kapazitiven Datenübertragung kann es sich beispielsweise um einen Hochpassfilter handeln, der entsprechend Ausführungsbeispielen ausgebildet ist, Frequenzen <10 MHz, < 1 MHz, < 0,5 MHz oder < 100 KHz herauszufiltern. Beide Filter (Hochpass und Tiefpass bzw. auf Seiten kapazitiver Kopplung und auf Seiten induktiver Kopplung) können entsprechend Ausführungsbeispielen in Kombination vorkommen oder entsprechend weiteren Ausführungsbeispielen auch jeder für sich alleine (d.h nur Hochpassfilter oder nur Tiefpassfilter bzw. nur Filter auf Seiten kapazitiver Kopplung oder nur Filter auf Seiten induktiver Kopplung).

Entsprechend bevorzugten Ausführungsbeispielen sind die verwendeten Frequenzen für die induktive Energieübertragung und die kapazitive Datenübertragung ausreichend voneinander separiert. Auch kann eine Art Guardband vorgesehen sein, z. B. im Bereich von 400 MHz mit einer Bandbreite von beispielsweise 100 MHz. Diese Werte sind natürlich nur exemplarisch. Bevorzugt ist ein Abstand zwischen den Frequenzen, die von dem kapazitiven Datenübertragungselement verwendet werden, und den Frequenzen, die von dem induktiven Energieübertragungselement verwendet werden, mindesten eine Dekade groß.

Wie oben bereits erläutert, kann bei der kapazitiven Datenübertragung eine Art Antenne, wie zum Beispiel eine Ringelektrodeverwendet werden. Diese Antenne/Ringelektrode/Kapazität wird sowohl auf Senderseite 18a als auch Empfängerseite 18b verwendet. Es sei angemerkt, dass entsprechend Ausführungsbeispielen jeweils eine Ringelektrode für Empfänger und Sender zusammen eingesetzt werden können und eine Kapazität bilden. Beispielsweise kann die eine Seite eine feststehende Seite sein, die andere eine rotierender Seite. Auch eine Rotation beider Seiten wäre möglich. Das induktive Energieübertragungselement weist ebenfalls eine Antenne auf, die beispielsweise als Spule und/oder Antenne gebildet ist. In dem dargestellten Fall weisen sowohl der Sender 16a und der Empfänger 16b eine entsprechende zweite Antenne/Spule/Induktivität auf.

Nachdem nachfolgend die Mechanismen für die Daten- und/oder Energieübertragung verwendet werden, werden weitere Elemente, die nicht dargestellt sind, erläutert. Die Daten- und/oder Energieübertragung kann entsprechend Ausführungsbeispielen den Zweck haben, dass ein Sensor und/oder Aktor auf dem rotierenden Element mit Energie und/oder Daten versorgt werden soll. Wenn man von einem Sensorelement 20 ausgeht, wird hier das Sensor-element 20 durch den Energieempfänger 18b mit Energie versorgt. Die Sensordaten werden bevorzugterweise mittels der Datenübertragung 16a und 16b übermittelt. In diesem Fall ist die Zuordnung von Sender und Empfänger nicht wie dargestellt, sondern umgekehrt, da der Datenfluss von 16b als Sender zu 16a fungiert. Die mittels dem Sensorelement 20 ermittelten Daten können also dann über den Sender 16b an den Empfänger 16a übermittelt werden. Entsprechend Ausführungsbeispielen kann die Datenübertragung zwischen 16a und 16b auch bidirektional erfolgen. Varianten für die Realisierung der Bidirektionalität sind gleich charakterisiert, so dass unterschiedliche Zeitslots und/oder unterschiedliche Frequenzslots und/oder unterschiedliche Ressourcen für das Senden und Empfangen verwendet werden. Entsprechend Ausführungsbeispielen kann das Element 20 auch als Aktor (auch ohne Sensor) oder als Sensoraktor fungieren. So wäre es beispielsweise denkbar, dass der mittels Energie versorgte Aktor 20 eine entsprechende Bewegung ausübt, eine Kraftabgabe durchführt und/oder eine Kühlung oder Erwärmung bewirkt. Hierbei kann der Aktor über die Datenleitung 16a zu 16b gesteuert werden.

An dieser Stelle sei angemerkt, dass die zu übertragende Energie eine elektrische Energie ist, die beispielsweise noch in einer Einheit (nicht dargestellt) auf dem rotierenden Element aufbereitet wird. Beispielsweise wäre ein Gleichrichter oder ein elektrischer Energiepuffer (Kapazität oder Batterie) oder ein Spannungswandler denkbar.

Entsprechend dem Ausführungsbeispiel wäre es ferner auch denkbar, dass über die induktive Energieübertragung auch Daten in Kleinstmengen, wie zum Beispiel Synchronisationsinformationen übertragen werden. Diese Synchronisationsinformationen können einerseits die Energieübertragung optimieren und andererseits aber auch als eigennützliche Information für die Datenübertragung dienen, z. B. zur Synchronisation der Kommunikationspartner. Dieser Information kann beispielsweise auf das Energiesignal aufmoduliert sein. Basierend auf dem Signal können die kapazitiven Datenübertragungselemente 18a und 18b synchronisiert werden. Eine weitere Anwendung dieses Signals beziehungsweise der übermittelten Information könnte sich auf die Blindleistungssteuerung für die Energieübertragung beziehen.

Fig. 1b zeigt eine weitere Variante, bei welcher die induktive Energieübertragungselemente 16a' und 16b' sowie die kapazitiven Datenübertragungselemente 18a' und 18b' nicht rotorisch entlang des Umfangs angeordnet sind, sondern axial zueinander. Das heißt also, die Rotationsmaschine 10' aus Fig. 1b weist ein feststehendes Element 12 und ein rotierendes Element 14' auf, wobei in axialer Richtung gesehen nebeneinander die zwei Sender 18a' und 16a' angeordnet sind und in einem axialen Abstand dazu die Empfänger 18b' und 16b'. Im Übrigen ist das Ausführungsbeispiel aus 1b vergleichbar mit dem Ausführungsbeispiel aus Fig. 1a, was anhand der gleichen Bezugszeichen verdeutlicht wird. Beschreibungen zu den jeweiligen Elementen sind aufeinander anwendbar beziehungsweise austauschbar.

An dieser Stelle sei angemerkt, dass sowohl das obige nicht zur beanspruchten Erfindung gehörende Beispiel 10 als auch das obige nicht zur beanspruchten Erfindung gehörende Beispiel 10' nicht auf eine Werkzeugmaschine beschränkt sein muss. Beispiele für eine Werkzeugmaschine sind Schleifmaschinen, Wälzschleifmaschinen oder Honmaschinen. Hierbei kann das rotierende Element neben der Rotationsbewegung um die Achse 14r entsprechend Ausführungsbeispielen auch eine Translationsbewegung ausführen. Alternative Varianten für die Verwendung des obigen Konzepts bei einem rotierenden Element ist der Einsatz in anderen rotierenden Elementen, wie zum Beispiel einem Rad, einem Propeller, einer Bremse oder einer Bremskomponente sowie beweglichen bzw. rotierenden Elementen von Robotern oder anderen Kraftübertragungssystemen.

Ein weiteres nicht zur beanspruchten Erfindung gehörendes Beispiel schafft ein rotierendes Element mit einer Sensoreinheit und/oder Aktoreinheit, umfassend ein Sensorelement oder Aktorelement sowie ein kapazitives Datenübertragungselement und ein induktives Energieübertragungselement (s.o.). Das kapazitive Datenübertragungselement und das induktive Energieübertragungselement sind in eine Einheit oder ein Element integriert, welches dann so ausgelegt ist, dass es sowohl bei hohen als auch bei niedrigen Frequenzen funktioniert.

## Patentansprüche

1. Mechanische Bearbeitungsmaschine, insbesondere Schleifmaschine, Wälzschleifmaschine oder Honmaschine, mit einem rotierenden Element (14, 14') mit einer Sensoreinheit (20), wobei die Sensoreinheit (20) folgende Merkmale umfasst:

    ein Sensorelement, ausgebildet, um einen physikalischen Parameter zu bestimmen und einen entsprechenden Sensorwert abzuleiten;
    ein kapazitives Datenübertragungselement (18a, 18b, 18a', 18b'), ausgebildet, um den zumindest einen Sensorwert nach extern zu übertragen; und
    ein separates induktives Energieübertragungselement (16a, 16b, 16a', 16b'), ausgebildet, um das zumindest eine Sensorelement und/oder das Datenübertragungselement mit elektrischer Energie zu versorgen;
    wobei die Sensoreinheit (20) zusätzlich einen Aktor aufweist, der ausgebildet ist, bei Versorgung mit elektrischer Energie und/oder Ansteuerung eine Bewegung und/oder eine Kraftabgabe und/oder eine Kühlung/Erwärmung und/oder Schallemission zu bewirken.

2. Mechanische Bearbeitungsmaschine gemäß Anspruch 1, wobei die Sensoreinheit (20) ferner Energieversorgungsmittel aufweist, die ausgebildet sind, um die durch das induktive Energieübertragungselement (16a, 16b, 16a', 16b') bereitgestellte elektrische Energie zur Versorgung der Sensoreinheit (20) und/oder der kapazitiven Datenübertragungseinheit (18a, 18b, 18a', 18b') aufzubereiten.

3. Mechanische Bearbeitungsmaschine gemäß Anspruch 1 oder 2, wobei das induktive Energieübertragungselement (16a, 16b, 16a', 16b') (z.B. auf Seiten der Sensoreinheit (20)) einen Filter aufweist, der ausgebildet ist, um Frequenzen größer 150 kHz und/oder größer 500 kHz herauszufiltern und/oder der als Tiefpassfilter ausgelegt ist; und/oder wobei das kapazitives Datenübertragungselement ein Filter aufweist.

4. Mechanische Bearbeitungsmaschine gemäß einem der vorherigen Ansprüche, wobei das induktive Energieübertragungselement (16a, 16b, 16a', 16b') ausgebildet ist, Zusatzinformationen zur Steuerung und/oder zur Interpretation des kapazitiven Datenflusses zu übertragen.

5. Mechanische Bearbeitungsmaschine gemäß einem der vorherigen Ansprüche, wobei das induktive Energieübertragungselement (16a, 16b, 16a', 16b') mit einem Empfänger und/oder Sende-Empfänger gekoppelt ist.

6. Mechanische Bearbeitungsmaschine gemäß einem der vorherigen Ansprüche, wobei ein Abstand zwischen Frequenzen, die von dem kapazitiven Datenübertragungselement verwendet werden, und Frequenzen, die von dem induktiven Energieübertragungselement (16a, 16b, 16a', 16b') verwendet werden, mindestens einer Dekade entspricht.

7. Mechanische Bearbeitungsmaschine gemäß einem der vorherigen Ansprüche, wobei das kapazitive Datenübertragungselement (18a, 18b, 18a', 18b') für Frequenzen größer 100 kHz, größer 0,5 MHz, größer 1 MHz oder größer 10 MHz ausgelegt ist; und/oder

   wobei ein Sender und/oder Sende-Empfänger, der mit dem kapazitiven Datenübertragungselement (18a, 18b, 18a', 18b') gekoppelt ist, einen Filter aufweist, der ausgebildet ist, Frequenzen kleiner 1 MHz, kleiner 0,5 MHz, kleiner 100 kHz herauszufiltern und/oder der als Hochpassfilter ausgebildet ist; und/oder
   wobei das induktive Energieübertragungselement (16a, 16b, 16a', 16b') ausgebildet ist, um ein Signal mit einer Frequenz kleiner 500kHz und/oder größer 1 kHz, oder kleiner 150 kHz und/oder größer 100 kHz, oder um die 120kHz zu empfangen.

8. Mechanische Bearbeitungsmaschine gemäß einem der vorherigen Ansprüche, wobei das kapazitive Datenübertragungselement (18a, 18b, 18a', 18b') eine erste Antenne aufweist.

9. Mechanische Bearbeitungsmaschine gemäß Anspruch 6, wobei die erste Antenne als Ringelektrode und/oder ein Kapazitätselement ausgeführt ist; und/oder wobei das kapazitive Datenübertragungselement (18a, 18b, 18a', 18b') zwei erste Antennen aufweist oder wobei das kapazitive Datenübertragungselement (18a, 18b, 18a', 18b') zwei erste Antennen aufweist, die zur differentiellen Datenübertragung ausgelegt sind; und/oder wobei das induktive Energieübertragungselement (16a, 16b, 16a', 16b') eine zweite Antenne aufweist; oder wobei das induktive Energieübertragungselement (16a, 16b, 16a', 16b') eine zweite Antenne aufweist und wobei die zweite Antenne durch eine Spule und/oder eine Induktivität gebildet ist.

10. Mechanische Bearbeitungsmaschine gemäß einem der vorherigen Ansprüche, wobei das kapazitive Datenübertragungselement (18a, 18b, 18a', 18b') zur bidirektionalen Datenübertragung ausgebildet ist.

11. Mechanische Bearbeitungsmaschine gemäß Anspruch 10, wobei das kapazitive Datenübertragungselement (18a, 18b, 18a', 18b') ausgebildet ist, um mit unterschiedlichen Zeitslots und/oder unterschiedlichen Frequenzslots und/oder mit unterschiedlichen Ressourcen zu senden und zu empfangen.

12. Mechanische Bearbeitungsmaschine gemäß einem der Ansprüche 1 bis 11, wobei das rotierende Element ausgebildet ist, eine Rotationsbewegung oder eine Rotationsbewegung in Kombination mit einer Translationsbewegung auszuführen.

**Claims**

1. Mechanical processing machine, in particular grinding machine, roll grinding machine or honing machine, having a rotating element (14, 14') with a sensor unit (20), the sensor unit (20) comprising:

   a sensor element configured to determine a physical parameter and to derive a corresponding sensor value;
   a capacitive data transmission element (18a, 18b, 18a', 18b') configured to transmit the at least one sensor value to the outside; and
   a separate inductive energy transmission element (16a, 16b, 16a', 16b') configured to supply the at least one sensor element and/or the data transmission element with electrical energy;
   wherein the sensor unit (20) additionally comprises an actuator that is configured to effect a movement and/or a force output and/or cooling/heating and/or sound emission when supplied with electrical energy and/or activated.

**2.** Mechanical processing machine according to claim 1, wherein the sensor unit (20) further comprises energy supply means configured to render the electrical energy provided by the inductive energy transmission element (16a, 16b, 16a', 16b') for supplying the sensor unit (20) and/or the capacitive data transmission unit (18a, 18b, 18a', 18b').

**3.** Mechanical processing machine according to claim 1 or 2, wherein the inductive energy transmission element (16a, 16b, 16a', 16b') (e.g. on the side of the sensor unit (20)) comprises a filter configured to filter out frequencies greater than 150 kHz and/or greater than 500 kHz and/or configured as a low-pass filter; and/or wherein the capacitive data transmission element comprises a filter.

**4.** Mechanical processing machine according to one of the preceding claims, wherein the inductive energy transmission element (16a, 16b, 16a', 16b') is configured to transmit additional information for controlling and/or interpreting the capacitive data flow.

**5.** Mechanical processing machine according to one of the preceding claims, wherein the inductive energy transmission element (16a, 16b, 16a', 16b') is coupled to a receiver and/or transceiver.

**6.** Mechanical processing machine according to one of the preceding claims, wherein a distance between frequencies used by the capacitive data transmission element and frequencies used by the inductive energy transmission element (16a, 16b, 16a', 16b') corresponds to at least one decade.

**7.** Mechanical processing machine according to one of the preceding claims, wherein the capacitive data transmission element (18a, 18b, 18a', 18b') is configured for frequencies greater than 100 kHz, greater than 0.5 MHz, greater than 1 MHz or greater than 10 MHz; and/or

wherein a transmitter and/or transceiver coupled to the capacitive data transmission element (18a, 18b, 18a', 18b') comprises a filter configured to filter out frequencies of less than 1 MHz, less than 0.5 MHz, less than 100 kHz and/or configured as a high-pass filter; and/or wherein the inductive energy transmission element (16a, 16b, 16a', 16b') is configured to receive a signal with a frequency of less than 500 kHz and/or greater than 1 kHz, or less than 150 kHz and/or greater than 100 kHz, or around 120 kHz.

**8.** Mechanical processing machine according to one of the preceding claims, wherein the capacitive data transmission element (18a, 18b, 18a', 18b') comprises a first antenna.

**9.** Mechanical processing machine according to claim 6, wherein the first antenna is configured as a ring electrode and/or a capacitance element; and/or

wherein the capacitive data transmission element (18a, 18b, 18a', 18b') comprises two first antennas or wherein the capacitive data transmission element (18a, 18b, 18a', 18b') comprises two first antennas configured for differential data transmission; and/or wherein the inductive energy transmission element (16a, 16b, 16a', 16b') comprises a second antenna; or wherein the inductive energy transmission element (16a, 16b, 16a', 16b') comprises a second antenna and wherein the second antenna is formed by a coil and/or an inductance.

**10.** Mechanical processing machine according to one of the preceding claims, wherein the capacitive data transmission element (18a, 18b, 18a', 18b') is configured for bidirectional data transmission.

**11.** Mechanical processing machine according to claim 10, wherein the capacitive data transmission element (18a, 18b, 18a', 18b') is configured to transmit and receive with different time slots and/or different frequency slots and/or with different resources.

**12.** Mechanical processing machine according to one of claims 1 to 11, wherein the rotating element is configured to perform a rotational movement or a rotational movement in combination with a translational movement.

**Revendications**

**1.** Machine d'usinage mécanique, en particulier ponceuse, tailleuse-ponceuse ou pierreuse, comprenant un élément rotatif (14, 14') avec une unité de capteur (20), l'unité de capteur (20) comprenant les caractéristiques suivantes :

un élément de capteur conçu pour déterminer un paramètre physique et pour dériver une valeur de capteur correspondante ; un élément de transmission de données capacitif (18a, 18b, 18a', 18b') conçu pour transmettre l'au moins une valeur de capteur vers l'extérieur ; et un élément de transmission d'énergie inductif séparé (16a, 16b, 16a', 16b') conçu pour alimenter en énergie électrique l'au moins un élément de capteur et/ou l'élément de transmission de données ;

l'unité de capteur (20) comprenant en outre un actionneur qui est conçu pour provoquer, lors de l'alimentation en énergie électrique et/ou de la commande, un mouvement et/ou une sortie de force et/ou un refroidissement/chauffage et/ou une émission sonore.

2. Machine d'usinage mécanique selon la revendication 1, l'unité de capteur (20) comprenant en outre des moyens d'alimentation en énergie qui sont conçus pour préparer l'énergie électrique fournie par l'élément de transmission d'énergie inductif (16a, 16b, 16a', 16b') pour alimenter l'unité de capteur (20) et/ou l'unité de transmission de données capacitif (18a, 18b, 18a', 18b').

3. Machine d'usinage mécanique selon la revendication 1 ou 2, l'élément de transmission d'énergie inductif (16a, 16b, 16a', 16b') (par exemple du côté de l'unité de capteur (20)) comprenant un filtre qui est conçu pour filtrer des fréquences supérieures à 150 kHz et/ou supérieures à 500 kHz et/ou qui est conçu comme un filtre passe-bas ; et/ou l'élément de transmission de données capacitif comprenant un filtre.

4. Machine d'usinage mécanique selon l'une quelconque des revendications précédentes, l'élément de transmission d'énergie inductif (16a, 16b, 16a', 16b') étant conçu pour transmettre des informations supplémentaires pour la commande et/ou l'interprétation du flux de données capacitif.

5. Machine d'usinage mécanique selon l'une quelconque des revendications précédentes, l'élément de transmission d'énergie inductif (16a, 16b, 16a', 16b') étant couplé à un récepteur et/ou à un émetteur-récepteur.

6. Machine d'usinage mécanique selon l'une quelconque des revendications précédentes, une distance entre des fréquences qui sont utilisées par l'élément de transmission de données capacitif et des fréquences qui sont utilisées par l'élément de transmission d'énergie inductif (16a, 16b, 16a', 16b') correspondant à au moins une décennie.

7. Machine d'usinage mécanique selon l'une quelconque des revendications précédentes, l'élément de transmission de données capacitif (18a, 18b, 18a', 18b') étant conçu pour des fréquences supérieures à 100 kHz, supérieures à 0,5 MHz, supérieures à 1 MHz ou supérieures à 10 MHz ; et/ou

un émetteur et/ou un émetteur-récepteur qui est couplé à l'élément de transmission de données capacitif (18a, 18b, 18a', 18b') comprenant un filtre qui est conçu pour filtrer des fréquences inférieures à 1 MHz, inférieures à 0,5 MHz, inférieures à 100 kHz et/ou qui est conçu comme un filtre passe-haut ; et/ou l'élément de transmission d'énergie inductif (16a, 16b, 16a', 16b') étant conçu pour recevoir un signal avec une fréquence inférieure à 500 kHz et/ou supérieure à 1 kHz, ou inférieure à 150 kHz et/ou supérieure à 100 kHz, ou autour des 120 kHz.

8. Machine d'usinage mécanique selon l'une quelconque des revendications précédentes, l'élément de transmission de données capacitif (18a, 18b, 18a', 18b') comprenant une première antenne.

9. Machine d'usinage mécanique selon la revendication 6, la première antenne étant conçue comme une électrode annulaire et/ou un élément capacitif ; et/ou l'élément de transmission de données capacitif (18a, 18b, 18a', 18b') comprenant deux premières antennes ou l'élément de transmission de données capacitif (18a, 18b, 18a', 18b') comprenant deux premières antennes qui sont conçues pour la transmission de données différentielle ; et/ou l'élément de transmission d'énergie inductif (16a, 16b, 16a', 16b') comprenant une deuxième antenne ; ou l'élément de transmission d'énergie inductif (16a, 16b, 16a', 16b') comprenant une deuxième antenne et la deuxième antenne étant formée par une bobine et/ou une inductance.

10. Machine d'usinage mécanique selon l'une quelconque des revendications précédentes, l'élément de transmission de données capacitif (18a, 18b, 18a', 18b') étant conçu pour la transmission de données bidirectionnelle.

11. Machine d'usinage mécanique selon la revendication 10, l'élément de transmission de données capacitif (18a, 18b, 18a', 18b') étant conçu pour émettre et recevoir avec différents créneaux temporels et/ou différents créneaux de fréquence et/ou avec différentes ressources.

12. Machine d'usinage mécanique selon l'une quelconque des revendications 1 à 11, l'élément rotatif étant conçu pour exécuter un mouvement de rotation ou un mouvement de rotation en combinaison avec un mouvement de translation.

Fig. 1a

EP 4 369 617 B1

Fig. 1b

EP 4 369 617 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3488206 B1
- US 2021199777 A1

- DE 10142273